# EUROPEAN PATENT SPECIFICATION

(11) **EP 3 011 528 B1**
(45) Date of publication and mention of the grant of the patent: **19.09.2018**
(21) Application number: 14813886.0
(22) Date of filing: 23.06.2014
(51) Int. Cl.: H04W 4/029, H04W 4/02

(54) **WIRELESS NETWORK AND MAC ADDRESS DEVICE DETECTION SYSTEM AND METHODS**
DRAHTLOSES NETZWERK UND SYSTEM UND VERFAHREN ZUR DETEKTION VON MAC-ADRESSEN-VORRICHTUNGEN
RÉSEAU SANS FIL ET SYSTÈME ET PROCÉDÉS DE DÉTECTION DE DISPOSITIFS D'ADRESSES DE COMMANDE D'ACCÈS AU SUPPORT

(30) Priority: 21.06.2013 US 201361838110 P; 12.02.2014 US 201461938836 P
(43) Date of publication of application: 27.04.2016
(73) Proprietor: WIFI Name, Inc., Washington, DC 20005 (US)
(72) Inventor: BRADISH, Stillman, New York, NY 10022 (US)
(74) Representative: Boult Wade Tennant LLP
(86) International application number: PCT/US2014/043573
(87) International publication number: WO 2014/205431

(56) References cited:
- EP-A2- 1 626 545
- US-A1- 2006 149 844
- US-A1- 2008 196 098
- US-A1- 2010 130 167
- US-A1- 2010 130 167
- US-A1- 2013 090 090
- US-A1- 2013 124 309
- US-A1- 2013 124 309
- GodlessManitoban: "Online Privacy: How to use D.N.T. (Do Not Track)", , 28 February 2012 (2012-02-28), pages 1-2, XP054976806, Retrieved from the Internet: URL:https://www.youtube.com/watch?v=r24oYi viaVI [retrieved on 2016-09-27]
- GODLESSMANITOBAN.: 'Privacy: How to use D.N.T. (Do Not Track).' YOUTUBE. 28 February 2012, XP054976806 Retrieved from the Internet: <URL:https://www.youtube.com/watch?v=r24oYi viaVl> [retrieved on 2014-12-30]

## Description

### TECHNICAL FIELD

The present invention relates generally to capturing and storing data transmitted by wireless devices.

### BACKGROUND

Many entities may track consumer behavior through the devices that consumers carry with them or use, such as a smartphone and a laptop. These entities may identify and track mobile devices using through the wireless signals that are transmitted by those devices. These entities may perform a number of analytics to derive information related to the consumers. On the other hand, modeling users and tracking user device may provide a number benefits. It would be desirable to allow consumers to opt-out or opt-in to privacy settings, which allows users to determine whether their devices may be tracked by tracking entities.

In some cases, this may be undesirable for policy, such as tracking children. However, legal regimes are often concerned with tracking the online behavior of children. In some cases, however, tracking entities may be concerned with liability associated with the tracking children, and may seek a means for identifying devices that, when tracked, inadvertently cause the tracking entities to track children. Furthermore, other products should not be tracked for policy and safety reasons. But it may be infeasible for each and every type of device that should not be tracked to be identified for tracking entities using conventional means. It would be desirable to allow manufacturers to identify devices that should not be tracked before distribution.

Geolocation data is one type of data that may be tracked by tracking entities. But in some cases, prohibiting this type of data from being tracked when there are known associations with products could preclude possible benefits of tracking that data. It would be desirable to selectively preclude tracking of certain devices but then enabling tracking when there is a need.

In U.S. 2010/130167, a subscriber securely initiates tracking and/or disabling of a communication device by a server. The subscriber receives location and/or usage reports for the communication device. The subscriber is provided with the capability to modify a profile, device status and/or transfer ownership of the device via a client server interface. Based on the profile, detection of a particular event triggers tracking and/or disabling of the device by the server. The communication device registers with the server utilizing its unique device ID and/or the subscriber identity information when accessing the internet. The server is enabled to communicate a status and/or a request for tracking information, to the communication device.

U.S. 2013/090090 describes a GPS signal converted into motion and idle indicator data. A task database includes task situs-location data, assignment and person data. Determining an idle mode generates idle ON indicia. Determining a movement ON status generates movement tracking indicia with location and time-based tracking over a subject time period. A privacy event masks the publication of idle and movement indicia during a privacy block.

EP-1626545 discusses a location tracking method in a coordinator-based wireless network. This includes transmitting a first frame including its own identifier and time information to the wireless network by a device associated with the wireless network in order to disclose its location information; and receiving a second frame including the location information of the device transmitted from the wireless network by the device, as a response to the first frame.

U.S. 2013/124309 discusses device identifiers for devices, such as computing devices, software, and applications, etc., being analyzed to determine whether the device identifiers are associated with each other (e.g., are connected to each other) and how strongly the device identifiers are associated with each other.

URL:https://www.youtube.com/watch?v=r24oYiviaVI discloses methods of enabling and disabling the tracking feature in different web browsers.

### SUMMARY

The invention is disclosed in claims 1 to 14. Systems and methods described herein reference a global registry of wireless devices, which may be identified by wireless identifiers (wireless IDs), such as device names and media access control (MAC) addresses. Exemplary systems and methods may facilitate control over privacy settings associated with devices by adjusting settings of devices in the global registry. Privacy settings may include the ability to track/trace device locations and the content presented to the device. Privacy settings may be associated with wireless IDs thereby allowing parties who would otherwise track wireless IDs determine privacy preferences of individual device owners.

In one embodiment, a computer-implemented method comprising receiving, by a registry server, a request not to track a device identifier (device ID) associated with a device; designating, by the registry server, the device ID is not to be tracked in a record of the device ID stored in a registry database; receiving, by the registry server, from a second server a query requesting whether one or more device IDs are designated to not to be tracked; searching, by the computer, the registry database for each respective record of the one or more device IDs of the query; and transmitting, by the registry server, a notification to the second server indicating whether each of the one or more device IDs are designated not to be tracked.

In another embodiment, a system comprising: a registry database comprising a non-transitory machine-readable memory storing one or more records of device IDs associated with one or more devices, wherein a record is configured to designate whether the device ID of the record can be tracked; a registry server comprising a processor updating a first record of a first device ID in the registry database in response to receiving a designation not to track the first ID, and in response to receiving a query determining whether one or more queried device IDs can be tracked according to the record of each queried device ID; and a second server comprising a processor transmitting the query for the one or more queried device IDs to the registry server, and receiving a notification indicating each of the queried device IDs designated not to be tracked.

In another embodiment, a computer-implemented method comprising: receiving, by a computer, a request to remove a device identifier (device ID) of a device from a registry database storing a listing of one or more device IDs of devices not to be tracked; removing, by the computer, the device ID from the listing of one or more device IDs in the registry; and transmitting, by the computer, to a second database the listing of one or more devices not be tracked stored in the registry database.

In another embodiment, a system comprising a registry database storing in non-transitory machine-readable storage memory one or more device identifiers (device IDs) associated with devices designated not to track; a listener device identifying a first device ID of a detected device using a wireless signal transmitted by the detected device, transmitting the detected device ID to a tracking entity, and configured to forward data related to the wireless signal to the tracking entity upon receiving authorization to track the detected device; a tracking database of the tracking entity storing one or more device IDs of devices not to track replicated from the registry database; and a tracking computer of the tracking entity determining whether to track the device ID of the detected device received from the listener device according to the tracking database.

In another embodiment, a computer-implemented method comprises receiving, by a computer of a tracking entity, from a listener device a device identifier (device ID) associated with a wireless device detected by the listener device; searching, by the computer, a first database storing one or more exempted device IDs (exempted IDs) associated with a wireless device exempted from tracking; determining, by the computer, whether the device ID matches at least one exempted ID in the first database; automatically discarding, by the computer, the device ID received from the listener device in response to determining the device ID matches the at least one exempted ID; in response to determining the device ID does not match the at least one exempted ID: receiving, by the computer, data describing a consumer associated with the device ID from the listener device; and storing, by the computer, the data describing the consumer associated with the device ID into a second database.

In another embodiment a computer-implemented method comprises continuously receiving, by a computer managing devices a tracking entity, data related to a geolocation of a plurality of devices from a plurality of listener devices capturing a wireless signal transmitted by each respective device; receiving, by the computer, from a server of a registry service a command to identify and track a geolocation of a device in the plurality of devices using the data related to the geolocation of the device captured by the plurality of listener devices; and disregarding, by the computer, a device ID of the device in a privacy database of the tracking entity storing one or more device IDs of devices exempted from tracking.

In another embodiment, a computer implemented method comprises receiving, by a server, a transmission requesting that a device identifier have a status in a registry database as opted out for tracking of device identifiers; automatically updating, by the server, a record in the registry database associated with the device identifier to indicate that the device identifier is opted out for tracking; receiving, by the server, a transmission from a tracking entity server requesting a status of at least one device identifier; querying, by the server, the status of the at least one device identifier to determine whether the device identifier has a status as opted out for tracking; and automatically transmitting, by the server, the status for the at least one device identifier when at least one device identifier has opted out for tracking.

It is to be understood that both the foregoing general description and the following detailed description are exemplary and explanatory and are intended to provide further explanation of the invention as claimed.

### BRIEF DESCRIPTION OF THE DRAWINGS

The accompanying drawings constitute a part of this specification and illustrate an embodiment of the invention and together with the specification, explain the invention.
**FIG. 1** shows a system of managing wireless device tracking according to an exemplary system embodiment.
**FIG. 2** shows a set of records that may be stored in a registry database according to an exemplary system embodiment.
**FIG. 3** shows an exemplary embodiment of graphical user interface of a software application of the system.
**FIG. 4** shows steps of a process for the registration and association of MAC addresses or other device identifier of a WED in a wireless device ID system, according to an exemplary method embodiment.
**FIG. 5** shows the steps of determining whether to track a detected MAC address according to an exemplary method embodiment.

### DETAILED DESCRIPTION

The present disclosure is here described in detail with reference to embodiments illustrated in the drawings, which form a part here. Other embodiments may be used and/or other changes may be made without departing from the spirit or scope of the present disclosure. The illustrative embodiments described in the detailed description are not meant to be limiting of the subject matter presented here.

Reference will now be made to the exemplary embodiments illustrated in the drawings, and specific language will be used here to describe the same. It will nevertheless be understood that no limitation of the scope of the invention is thereby intended. Alterations and further modifications of the inventive features illustrated here, and additional applications of the principles of the inventions as illustrated here, which would occur to one skilled in the relevant art and having possession of this disclosure, are to be considered within the scope of the invention.

Systems described herein may provide users and/or owners of mobile devices (e.g., smart phones, cellular phones, mobile phones, tablet computers, personal data assistants, laptop computers, gaming consoles, or other device with a wireless device identifier) the ability to register a device identifier (device ID) that identifies their device the WiFi MAC address of a mobile device and associate preferences to this registration. One preference may be "Do Not Track My MAC." This preference can be especially important for minors and others who are expected to have greater protection from tracking systems online, especially now as mobile devices increase in popularity.

The system may interact or comply with specifications set by a group of recognized privacy professionals who represent the privacy community as well as the community of device trackers who are doing the tracking. In this system, users can feel protected and in control, while at the same time, the system can increase the usability of mobile device tracking innovations for entities who desire to use new services and interactions with mobile devices through device tracking.

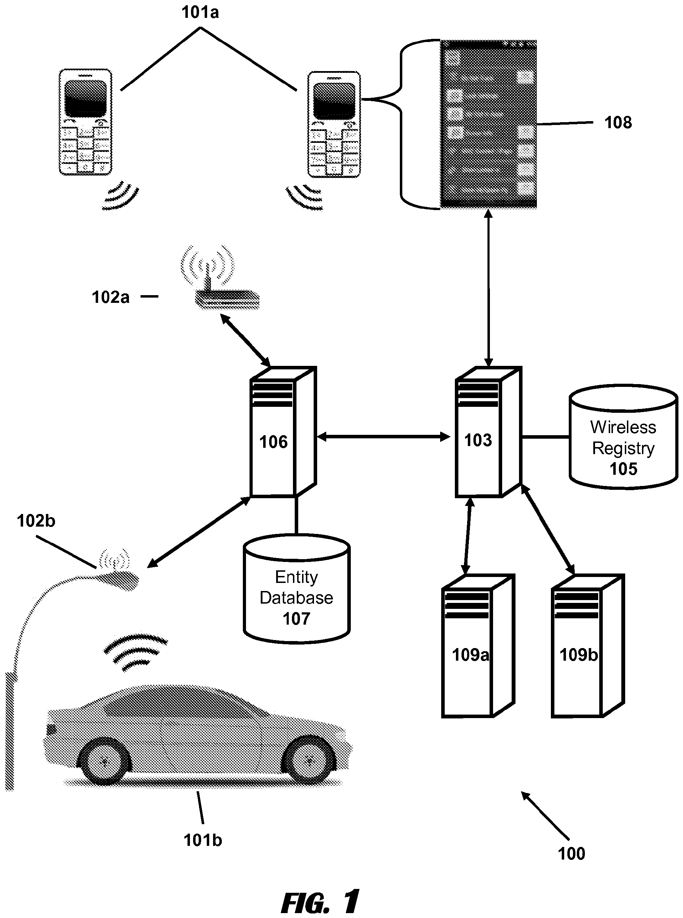

**FIG. 1** shows a system of managing wireless device tracking according to an exemplary embodiment. The exemplary system **100** includes one or more wireless-enabled devices (WED) **101** installed with a registration application **108.** The WED **101** may be any electronic device transmitting a device ID identifying the WED **101.** The WED **101** may include a transceiver, a memory, a display, a registration application **108,** and a processor. By a way of illustration and not by way of limitation, WED **101** may include cell phones, smartphones **101a,** access points **102b,** routers **102a,** networking switches, tablet computers, desktop computers, PDAs, banking terminals, cash register, a car **101b,** a toy, gaming console, music player, a home appliance, a RFID card, a NFC card, an electronic bracelet, a Bluetooth® tracker, a vending machine, Bluetooth® or Wi-Fi enabled cloth, shoes, a teddy bear, a key chain, appliance, and the like. A registry application **108** may provide instructions to the processor of a particular WED **101** to interact with a registry server **103** using the APIs of the system **100.**

The WEDs **101** connect to a listening device (listener) **102,** such as a router **102a,** through wireless signals broadcast from the WEDs **101.** The listener device **102** sends tracking information about the WEDs **101** to a tracking entity database **107,** which stores tracking data by MAC addresses or other wireless IDs. The listener device **102** may track WEDs **101** using any wireless ID, such as a WiFi MAC address, a CellPhone ID, a Bluetooth MAC, an SSID, a Bluetooth Name, an LTE Hardware ID, an LTE Direct Expression, a Zigbee ID, a beacon ID, a wireless name, or any other unique identification associated with a WED **101.**

The WEDs **101** also send device identifiers (device IDs), such as wireless IDs, to the wireless registry database **105** through the registration application **108.** The wireless registry database **105** and the tracking entity database **107** may interact in various ways to transmit data related to WEDs **101** and users. For example, the tracking entity may check device identifiers received from the listener device **102** using the wireless registry database **105.** In response, the wireless registry **105** may return information about the received device identifier (e.g., MAC address, privacy settings, name of owner). The information about the device identifier may include preferences or other information. The wireless registry database **105** may also replicate, or push, device identifiers having a do not track setting to a tracking entity's database **107.**

System **100** may comprise a server of a wireless registry service **103** (registry server **103**), which may be any computing device comprising non-transitory machine-readable storage media and a processor capable of performing one or more of the various steps and processes described herein. The registry server **103** may be communicatively coupled with one or more wireless enabled devices (WED) **101** and a server of a tracking entity (privacy server **106**). The registry server **103** may comprise a webserver software module that may execute one or more application programming interfaces (APIs) for exchanging information. In some embodiments, a software application associated with the system (registry application) **108** associated with the system **100** may be executed by mobile devices **101a.** The registry server's **103** webserver module may be configured to exchange information with this registry application **108** using the appropriate APIs.

System **100** may comprise a wireless registry database **105.** The wireless registry **105** may be any computing device comprising a non-transitory machine-readable storage media capable of storing device identifiers (device IDs) of WEDs **101.** It should be appreciated that the registry database **105** may be embodied on the same physical device as the registry server **103,** or may reside on a distinct computing device capable of performing the tasks and processes described herein. Examples of a registry **105** may include MySQL, PostgreSQL, SQLite, Microsoft SQL Server, Microsoft Access, Oracle, SAP, dBASE, FoxPro, IBM DB2, LibreOffice Base, FileMaker Pro and/or any other type of database that may organize collections of data on a non-transitory machine-readable storage medium. The registry **105** may be accessed or managed by an administrative user of the system **100,** and may be interacted with using APIs. The registry database **105** may store a plurality of records, each record being associated with a device ID. The record may also comprise an identifier that indicates whether the device ID has been designated to opt out of tracking. The indicator may represent the status as opted out, exempted, excluded, or the like. The record may be updated upon receiving a selection by a user, automatically updated based upon receiving information about the user (e.g., user's age), or generated when the device is manufactured. The record may also comprise information about the device (e.g., type of device) associated with the device ID or a user (e.g., characteristics of a user, identification information of the user, account information of the user) associated with the device ID. If a device ID has been identified as opted out, the registry server **103** may remove some or all of the data from the records associated with the opted out device IDs.

The registry database **105** may store a first list of device IDs and a second list of device IDs that are opted out of the first list. As a user selects to opt out a device ID, the record in the registry database **105** can be updated to reflect that the device ID should be included only on the second list. When the tracking entity requests a list of opted out device IDs, the registry server 103 can provide the second list to the tracking entity server **106.**

Alternatively, the registry database **105** may store a single listing of all device IDs, and the records for each device ID may indicate whether that particular device ID has been opted out. The device ID may have a flag, identifier, indicator, or other status that is recognized when the tracking entity server **106** queries for those device IDs that have been opted out.

In one embodiment, the tracking entity database **107** may store a list of device IDs received from the registry database **105** that are opted out. The tracking entity database **107** may download this list continuously or periodically (e.g., hourly, daily, weekly) via a tracking entity server **106** communicatively coupled to a registry server **103.** The tracking entity server **106** transmits a request to the registry server **103** to receive an updated list of opted out device IDs. When the tracking entity collects tracking information from devices using listener devices **102,** the tracking entity server **106** queries the tracking entity database **107** to determine whether the device IDs associated with the tracked devices have been identified as exempt or opted out devices. When the devices appear on the opted out list, the tracking entity server **106** automatically removes or deletes the tracking data for those opted out device IDs.

In another embodiment, the tracking entity server **106** can request to download a list of opted out device IDs from the registry database **105** via the registry server **103.** The tracking entity server **106** receives device IDs from listener **102** for tracked devices and queries the list to determine whether the device IDs have been listed as opted out devices. When the device IDs appear on the opted out list, the tracking entity server **106** automatically removes or deletes the tracking data associated with the opted out device IDs. In this embodiment, rather than storing and updating a list from the registry server **103,** the tracking entity server 106 downloads the list as needed or desired, such as on a periodic basis (e.g., hourly, daily, weekly).

WED **101** may transmit a beacon message without a user's knowledge. This beacon message may be an aspect of the standard wireless technology and may be captured by a wireless access point or listener device **102.** A beacon message may transmit a device identifier which may include the MAC address or other device identifier of the WED **101.** This exemplary embodiment describes a MAC address, but it should be appreciated that the device identifier is not limited to the MAC address. The MAC address of WED **101** can be registered or stored in wireless registry **105,** where registered or stored MAC addresses can be associated with profiles of users of the WED **101** associated with the MAC address. More specifically, the MAC address of WED **101** registered in wireless registry **105** may be associated with personal information, such as geolocation data (e.g., present location, historical geolocation), and shopping history. Personal information of users, where this personal information may be stored in wireless registry. Personal information may include name, phone number, email, civil status, mailing address, and occupation, among others.

Tracking entities may collect data about users through wireless access points **102a** and/or listener devices **102b** by collecting beacon messages and other wireless communications transmitted from WEDs **101.** The access point or listener device **102** may use a wireless signal or technology of any type, such as virtual local area network (VLAN), Bluetooth, Wi-Fi, WiMax, SuperWiFi, LTE systems, LTE Direct, Wi-Fi Direct, or any other wireless signal or technology. Tracking entities may include software application developers and services, websites, and entities performing mobile location analytics (MLAs) using the wireless communications. A server of a tracking entity (entity server) **106** may be any computing device comprising non-transitory machine-readable storage media and processors capable of performing steps and tasks described herein. The entity server **106** may receive wireless data captured by listener devices **102** over one or more networks, such as the Internet, an intranet, and the like. In some cases, the listener devices **102** may identify device IDs of WEDs **101** transmitting beacon messages. In one example, a listener device **102** may be a wireless access point (e.g., wireless router) **102a** for providing Internet access or other network access, to mobile computing devices, such as a tablet or a smartphone **101a.** In another example, a roadside listener device **102b** may capture wireless signals transmitted by a wireless-enabled car **101b.** Listener devices **102** may capture wireless signals and MAC addresses and forward them to the entity server **106.**

The system **100** may comprise an entity or privacy database **107,** which may be any computing device capable of storing device IDs of WEDs **101** exempted or opted out from being tracked. The tracking entity database **107** may further store personal information associated with users, where such information is captured and/or derived using analytics of wireless transmissions captured by listener devices **102.** It should be appreciated that the tracking entity database **107** may reside on the tracking entity server **106** or may be a distinct physical device. In one embodiment, the tracking entity server **106** may communicate with a registry server **103** through APIs configured to send and receive wireless identifiers for WEDs **101** over a suitable network. In some cases, personal information may also be transmitted between the servers **103, 106.**

In one embodiment, the tracking entity server **106** receives device IDs from the listener devices **102.** For each detected device ID, the tracking entity server **106** queries the registry database **105** using an API to the registry server **103** to determine whether the detected device ID is designated as opted out. As a result, the tracking entity server **106** can automatically confirm whether the opt out status of a device ID as it is received rather than storing and/or updating a list of opted out device IDs in a tracking entity database **107.** This confirmation can occur substantially in real-time using the registry server **103** API.

According to some aspects of this embodiment, users of system **100** may download a registration application **108** to WED **101a** or otherwise access the registration application **108** online. The registration application **108** be used for automatically retrieving the MAC address or other device identifier of WED **101** and registering said MAC address in the registry database **105.** Users of system **100** may have the option of selecting a "do not track" option when registering MAC addresses or other device identifier, where this "do not track" option may identify the device as requesting not to be tracked by devices of tracking entities **102, 106, 107.** In such "do not track" embodiments, a registry database may be configured to replicate do not track fields associated with the device identifiers to an entity database **107.** Entity databases may allow entity server **106** whether the entity server **106** may collect data from listeners **102,** and may determine whether entity database may store geolocation and personal data collected from WEDs **101.**

A registration application **108** may be deployed on any suitable computing device comprising non-transitory machine-readable storage media and a processor, including a laptop, a tablet, or a smartphone **101a.** In an exemplary embodiment, the application **108** may be a free download, and may be displayed on a smartphone **101a** as a single user interface. In the exemplary embodiment of **FIG. 1****,** after installation of the registration application **108** onto a smartphone **101a,** the smartphone **101a** may transmit a device identifier, such as the device's MAC address that may be stored in a registry database **105,** and allows the user to select privacy preferences determining whether the smartphone **101a,** and other WEDs **101,** such as a car **101b,** or a toy, may be tracked and/or whether personal information may be collected from the WED **101.** The device identifier may be transmitted to a registry server **103** which then stores and the information in the registry database **105.**

In some embodiments, a server of a third party **109** may interact with the registry server **103.** Third parties may include a governmental entity, a non-profit organization, a mobile application analytics company unrelated to tracking, a device retailer or wholesaler, and a device manufacturer. The third party server **109** may utilize APIs of the system **100** to transmit and receive data to the registry database **103,** which in many cases updates the device identifiers and privacy settings associated with device identifiers stored in the registry **105.** In one example, a server of a manufacturer **109a** may transmit a bulk load of MAC addresses of WEDs **101** that are to be given a "do not track" privacy setting before the WEDs **101** may be purchased by consumers. In another example, a server of a law enforcement agency (police server) **109b** may request for a registry server **103** to suspend a "do not track" privacy setting of a device being tracked by law enforcement. This request may be performed by manual or automated process, such as in the case of an amber alert. In this example, the police server **109b** may transmit a device identifier, or other information for identifying a particular WED **101,** which may be then be used to remove or otherwise disregard the "do not track setting" of a WED **101.** The registry server **103** may then promulgate the device identifier to entity databases **107,** and instruct entity servers **106** to prioritize data processing and intake to identify and locate the WED **101.**

System **100** may further include a website portal hosted by the registry server **103** that allows mobile device tracking companies to register to use the system. Registration, in some cases, may involve creating an account using the website portal or with a MAC Preferences administrator application that is made available to users by a partnering tracking entity. A registration process tailored for tracking entities may also provide one or more tracking partners with an API key for the partner API. The registry server **103** may provide APIs for partnering tracking entities or third parties, which may include a wireless registry tracking-partner MAC registry API. The wireless registry tracking-partner MAC registry API may be configured to provide participating tracking entities with efficient and globally accessible preference information by individual MAC addresses of WEDs **101.** This API may be designed to be efficient and scalable. Tracking entities who wish to partner with the system **100** may sign up, register, and/or subscribe to the APIs of the system **100** to receive the registry database **105** records. Subscribing entities may then configure their entity servers **106** to check MAC addresses through this API, or to receive replicated updates of the registry database **105.** The tracking entities may check for MAC Addresses, to determine whether they may be tracked, as often as needed to maintain legitimate opt-in functionality for users who requested to opt-in to exempting their WEDs **101** from being tracked, or for WEDs **101** belonging to or marketed to individuals who are legally required to not be tracked. In some embodiments, the registration application **108** may provide for an opt-out function that allows participating trackers to increase their interaction with interested users, whereas an opt out function sets a WED's **101** privacy setting to "do not track" by default, and thus users must identify that they want to remove their "do not track" protections from the wireless registry database **105.**

In some embodiments, the wireless registry tracking partner MAC registry API can have graduated levels of service, and the costs of each level can be determined by usage-based contributions by registered tracking partners. The API can tell the Partner if the user is not to be tracked, as well as self-identified user information the user has voluntarily provided.

The system may include other features that can be added as appropriate depending on the partners needs or desires. In one exemplary feature, the MAC registry allows partner mobile app installations themselves on tracked user's mobile devices, and such installation is reflected in the server. When a user opts-in via installing a partner app on the mobile device, the partner can send a record to the Wireless Registry indicating this transaction as opt-in, and the opt-in will be reflected in the MAC preferences app. This allows partner apps to request permission to install to the local device, and such installations may be reflected in the system.

In another exemplary feature, all MAC addresses can act as email addresses; for example MAC@wirelessregistry.com. The MAC address email may flow through to the registered email address of the user without giving out any personal information or underlying email information. The flow through can be toggled on and off with the app. This allows machine interaction with users and real world venues similar to automated phone systems. In yet another exemplary feature, all MAC addresses can act as user splash pages, for example www.wirelesssregistry.com/MAC. The splash pages allow the user to present content in certain situations and toggle the availability of this page on and off using the app depending on the business or personal situation. For example, social networks can be available via this feature.

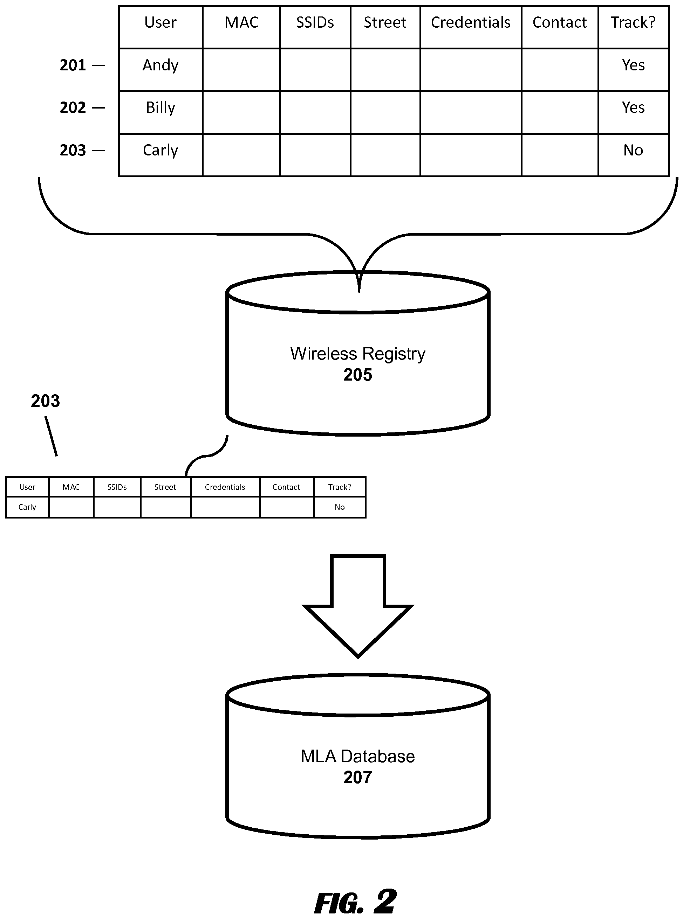

**FIG. 2** shows a set of records **201, 202, 203** that may be stored in a registry database **205** according to an exemplary system embodiment. In some embodiments, a user may access the registration application to adjust privacy settings of a particular WED. The registration application may then transmit a request to the registry's server (shown in **FIG. 1** as server **103**) to update the privacy settings (i.e., track or do not track) for the WED according to changes entered by the user through the registry application. In general, the registration application interacts with an API that transmits MAC Preferences from the WED to the registry server. Examples of information and device identifiers may include MAC address(es), SSID(s) of wireless networks associated with the WED, owner registration information, and Track/NoTrack settings, Preference Toggles, and Social Media Toggles. Each of these items of information my be set within the mobile app and sent to the MAC preferences API to be saved by the server.

The wireless registry database **205** may replicate records **201, 202, 203** to an tracking entity database **207** at a predetermined interval (e.g., hourly, daily, weekly), after an update to one or more records, and/or when the tracking entity database **207** requests or pulls the records **201, 202, 203.** In some cases, only updated or changed records **201, 202, 203** are replicated to, or requested by, the entity database **207.** In the exemplary embodiment of **FIG. 2****,** the registry database **205** replicates a record **203** having a privacy setting indicating the WED is allowed to be tracked by tracking entities. In some embodiments, prior to replication, the registry database **205** may discard an exempted record **203** having a privacy setting that indicates the WED of the record is not to be tracked. In such embodiment, only records indicating WEDs permitted to be tracked may be replicated.

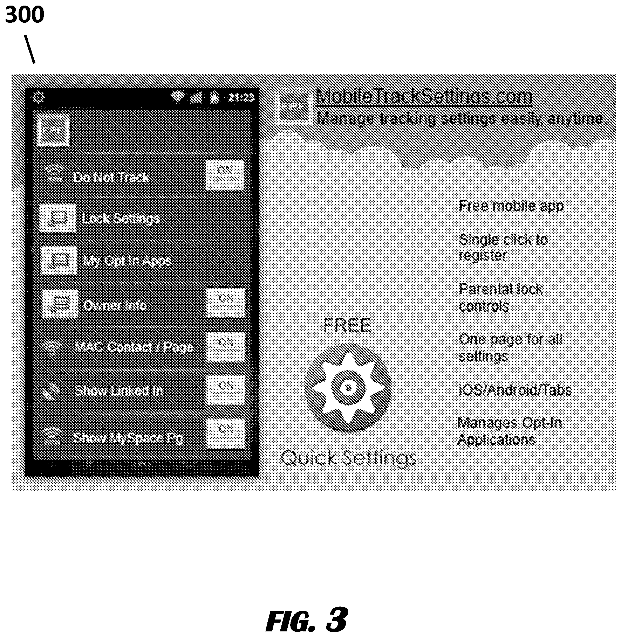

**FIG. 3** shows an exemplary embodiment of graphical user interface of a software application of the system, which can be presented for display on a WED. As previously mentioned, a system embodiment may incorporate a mobile application **300,** or other software module for other WEDs, which may be deployed on any mobile operating system, such as Android® and iOS®. In the exemplary embodiment of **FIG. 3****,** the mobile application **300** may be downloaded from a registry server or a third-party provider (e.g., Apple App Store®). The mobile application **300** and may be displayed on a WED as an integrated interface, or the mobile application **300** may be a web-based interface. A user may indicate a privacy setting, update profile information and configurations stored on the registry database. In some embodiments, users may indicate specific applications that may track the WED, while also excluding other applications from tracking the WED.

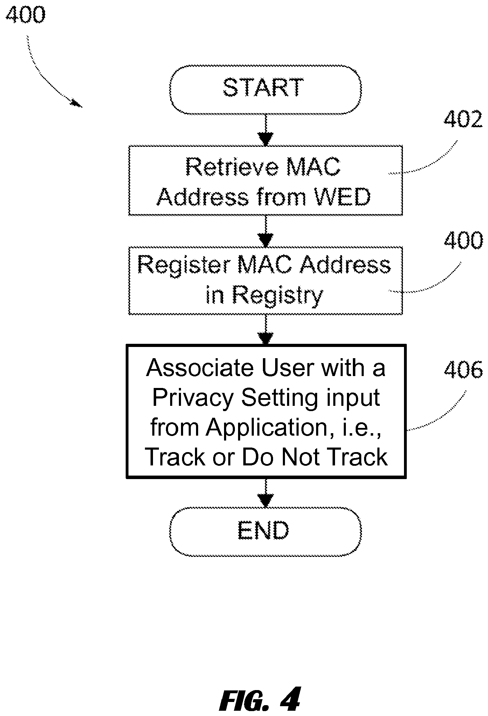

**FIG. 4** shows steps of a process for the registration and association of MAC addresses or other device identifier of a WED in a wireless device ID system, according to an exemplary method embodiment.

Process **400** may begin when a user of a WED desires to exempt the MAC address or other device identifier of the WED from being captured by listeners and/or being tracked by tracking entities. According to some aspects of this embodiment, WEDs may download a registration application from the registry server of the wireless ID system. More specifically, users of WEDs may connect to the API and may download the registration application from the registry, where this registration application may be installed in the WED.

In step **402,** the registration application may automatically retrieve the MAC address or other device identifier from the operating system of the WED. For example, the WED may be a smartphone which may use the Internet to connect to the API providing for communication between the registration application and the registry server where this registration application may automatically retrieve the MAC address of the smartphone. In other embodiments, depending of the type of WED and operation, the registration application may retrieve other device identifiers such as RFID tags, NFC tags, SSIDs, and Bluetooth® addresses, among others.

At step **404,** the registration application may use an API of the system to send the MAC address or other device identifier of the WED. A registry server which may check if the retrieved MAC address is registered in the registry database. If the retrieved MAC address was not previously registered in the registry database, API may proceed to register the MAC address in the registry database. In other embodiments, the API may register other device identifiers such as RFID tags, NFC tags, SSIDs, and Bluetooth® addresses, among others.

At step **406,** based on a privacy setting input by the user via the registration application, the API associates the registered MAC address or other device identifier with a "do not track" privacy setting, which may prevent the registered MAC address or other device identifier from being tracked, stored, and/or replicated to tracking entity databases.

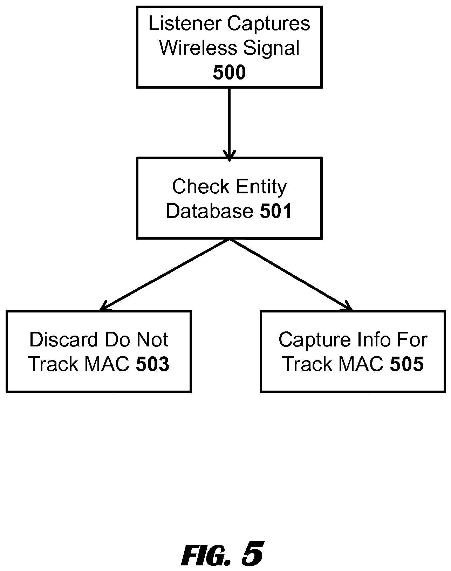

**FIG. 5** shows the steps of determining whether to track a detected MAC address according to an exemplary method embodiment.

In triggering step **500,** the method begins when a WED interacts with a listener, such as a wireless network access point or router. The listener transmits data associated with the device to a server of a tracking entity. The data collected by the listener may be data derived from the wireless signal detected or otherwise received by the listener. In some cases, the data may include a device identifier, such as a MAC address. Data associated with the device may also include a geolocation of the WED and personal information of the device owner.

In step **501,** the entity server may comprise, or may be coupled to, an entity database receiving replicated records from a registry database. The records may contain information related to WEDs, including a privacy setting indicating whether the WED may be tracked by the tracking entity. Users may determine preferences for whether devices may be tracked, or the privacy settings may be input in bulk at the time of manufacture by the WED manufacturer. A legal regime, or a particular product, may provide a default setting determining the privacy setting without user input. Changes to the default setting may be replicated from a registry database at a predetermined interval, or when the tracking server requests or pulls updates for the tracking database.

In some embodiments, a tracking server may not utilize a tracking database distinct from the registry database. For example, the tracking server may request a privacy setting from the registry database each time a new WED is detected by a listener. In some embodiments, the tracking server may receive one or more device identifiers of detected devices from the entity's listeners, and provide a bundle of wireless identifiers to the registry to determine a privacy setting. In such an embodiment, an entity server utilizing an entity database that intends to store all of the records (i.e., devices to track and devices to not track) checks the entity database first, and then the entity server provides the bundle of detected WEDs to the registry database to determine the privacy setting of the WEDs. New WEDs and updates to existing WED records may be downloaded from the registry database to the entity database. This may be performed at predetermined intervals, when an update is detected by the tracking entity devices, and/or at some triggering event.

In step **503,** the entity server identifies a privacy setting associated with the device identifier of the detected WED. The privacy setting, in step **503,** indicates a do not track preference, which exempts the device from tracking. In many cases, the process ends. In some embodiments, the entity database updates a record associated with the WED to indicate that the WED is not to be tracked. In some embodiments, the wireless identifier is deleted from every computing device of the tracking entity. The tracking entity does not track the WED.

In step **504,** the entity server identifies a privacy setting associated with the device identifier of the detected WED. The privacy setting, in step **504,** indicates that it is permissible to track the WED. The entity server instructs the listener devices to proceed capturing data from the wireless signal of the WED, and the entity server may perform a number of other analytics from the data to derive further information about the user. The WED may store this information in an entity database and/or transmit the information to the registry database.

In one example, an adult has a cellular phone and a minor (i.e., a child) has a music playing device (e.g., an Apple iPod). The adult may register the device ID of the music playing device with the registry database to indicate that the music playing device should not be tracked. The registry database will update a record associated with that device ID to indicate that it should not be tracked. When the adult and the minor enter a store that has a listener device, the listener device will identify the device ID of the adult's cellular phone and the minor's music playing device. The listener device will send these device IDs to a tracking entity server of an MLA. The MLA will confirm whether either of these device IDs have opted out from tracking. As discussed above, the MLA can download a list of opted out device IDs or the MLA can confirm using an API of a registry server associated with the registry database. When the MLA determines that the minor's music playing device has a device ID that is opted out of tracking, then the MLA will remove all tracking data of that device ID. In this example, because the adult's cellular phone has not opted out, the MLA will maintain the tracking data associated with the adult's cellular phone and continue to track it.

The exemplary embodiments can include one or more computer programs that embody the functions described herein and illustrated in the appended flow charts. However, it should be apparent that there could be many different ways of implementing aspects of the exemplary embodiments in computer programming, and these aspects should not be construed as limited to one set of computer instructions. Further, those skilled in the art will appreciate that one or more acts described herein may be performed by hardware, software, or a combination thereof, as may be embodied in one or more computing systems.

The functionality described herein can be implemented by numerous modules or components that can perform one or multiple functions. Each module or component can be executed by a computer, such as a server, having a non-transitory computer-readable medium and processor. In one alternative, multiple computers may be necessary to implement the functionality of one module or component.

Unless specifically stated otherwise as apparent from the following discussion, it is appreciated that throughout the description, discussions utilizing terms such as "tracking" or "associating" or "displaying" or "interacting" or "operating" or the like, can refer to the action and processes of a data processing system, or similar electronic device, that manipulates and transforms data represented as physical (electronic) quantities within the system's registers and memories into other data similarly represented as physical quantities within the system's memories or registers or other such information storage, transmission or display devices.

The exemplary embodiments can relate to an apparatus for performing one or more of the functions described herein. This apparatus may be specially constructed for the required purposes, or it may comprise a general purpose computer selectively activated or reconfigured by a computer program stored in the computer. Such a computer program may be stored in a machine (e.g. computer) readable storage medium, such as, but is not limited to, any type of disk including floppy disks, optical disks, CD-ROMs and magnetic-optical disks, read only memories (ROMs), random access memories (RAMs) erasable programmable ROMs (EPROMs), electrically erasable programmable ROMs (EEPROMs), magnetic or optical cards, or any type of media suitable for storing electronic instructions, and each coupled to a bus.

The exemplary embodiments described herein are described as software executed on at least one server, though it is understood that embodiments can be configured in other ways and retain functionality. The embodiments can be implemented on known devices such as a personal computer, a special purpose computer, cellular telephone, personal digital assistant ("PDA"), a digital camera, a digital tablet, an electronic gaming system, a programmed microprocessor or microcontroller and peripheral integrated circuit element(s), and ASIC or other integrated circuit, a digital signal processor, a hard-wired electronic or logic circuit such as a discrete element circuit, a programmable logic device such as a PLD, PLA, FPGA, PAL, or the like. In general, any device capable of implementing the processes described herein can be used to implement the systems and techniques according to this invention.

It is to be appreciated that the various components of the technology can be located at distant portions of a distributed network and/or the Internet, or within a dedicated secure, unsecured and/or encrypted system. Thus, it should be appreciated that the components of the system can be combined into one or more devices or co-located on a particular node of a distributed network, such as a telecommunications network. As will be appreciated from the description, and for reasons of computational efficiency, the components of the system can be arranged at any location within a distributed network without affecting the operation of the system. Moreover, the components could be embedded in a dedicated machine.

Furthermore, it should be appreciated that the various links connecting the elements can be wired or wireless links, or any combination thereof, or any other known or later developed element(s) that is capable of supplying and/or communicating data to and from the connected elements. The term module as used herein can refer to any known or later developed hardware, software, firmware, or combination thereof that is capable of performing the functionality associated with that element. The terms determine, calculate and compute, and variations thereof, as used herein are used interchangeably and include any type of methodology, process, mathematical operation or technique.

The embodiments described above are intended to be exemplary. One skilled in the art recognizes that numerous alternative components and embodiments that may be substituted for the particular examples described herein and still fall within the scope of the invention.

## Claims

1. A computer-implemented method comprising:
receiving, by a registry server (103), a request not to track a device identifier, device ID, associated with a device (101);
designating, by the registry server, the device ID is not to be tracked in a record of the device ID stored in a registry database (105, 205);
receiving, by the registry server, from a second server (102, 106) a query requesting whether one or more device IDs are designated to not to be tracked; and
searching, by the registry server, the registry database for each respective record of the one or more device IDs of the query;
transmitting, by the registry server, a notification to the second server indicating whether each of the one or more device IDs are designated not to be tracked.

2. The method according to claim 1, further comprising:
receiving, by the registry server (103), a second request enabling tracking for a second device ID associated with a second device; and
designating, by the registry server, the second device ID able to be tracked in a second record of the second device ID stored in the registry database (105).

3. The method according to claim 1, wherein the request not to track the device ID is received from a client device (101) executing a software module communicating with the registry server (103) using an API of the registry server.

4. The method according to claim 1, wherein the registry server (103) comprises a webserver hosting a registration webpage configured to receive one or more requests from a client device (101).

5. The method according to claim 1, further comprising storing, by the registry server, in the registry database (105, 205) a new record for the device ID of the request in response to determining that no record for the device ID exists in the registry database.

6. The method according to claim 1, wherein the registry server (103) transmits the notification to the second server (102, 106) responsive to determining that the second server is subscribed to an API communicating data with the registry server.

7. The method according to claim 1, wherein the notification contains a listing of each of the one or more device IDs designated not to be tracked.

8. The method according to claim 7, wherein the notification further contains instructions for a second database (107, 207) to purge the devices IDs designated not to be tracked.

9. The method according to claim 8, wherein the notification further contains the record of each of the one or more device IDs in the query.

10. The method according to claim 1, wherein the device ID is selected from the group consisting of: a MAC address, a wireless name, an SSID, a beacon ID, a LTE direct ID, a Zigbee ID, a device name, and a Bluetooth address.

11. The method according to claim 1, wherein the second server is a listener device (102), where query requests comprise a device ID, and the registry database (105, 205) stores one or more exempted device IDs, the method further comprising:
automatically discarding, by the registry server (103), the device ID received from the listener device in response to determining the device ID matches the at least one exempted ID;
in response to determining the device ID does not match the at least one exempted ID:
receiving, by the registry server, data describing a consumer associated with the device ID from the listener device; and
storing, by the registry server, the data describing the consumer associated with the device ID into a second database (107, 207).

12. The method according to claim 1, wherein the request not to track a device ID and/or the request whether one or more device IDs are designated not to be tracked is for geolocation tracking.

13. A system (100) comprising:
a registry database (105, 205) comprising a non-transitory machine-readable memory storing one or more records of device IDs associated with one or more devices (101), wherein a record is configured to designate whether the device ID of the record can be tracked;
a registry server (103) comprising a processor updating a first record of a first device ID in the registry database in response to receiving a designation not to track the first ID, and in response to receiving a query determining whether one or more queried device IDs can be tracked according to the record of each queried device ID; and
a second server (102, 106) comprising a processor transmitting the query for the one or more queried device IDs to the registry server, and receiving a notification indicating each of the queried device IDs designated not to be tracked.

14. The system of claim 13, further comprising:
a listener device (102) identifying a first device ID of a detected device using a wireless signal transmitted by the detected device, transmitting the detected device ID to the second server, and configured to forward data related to the wireless signal to the tracking entity upon receiving authorization to track the detected device.

## Patentansprüche

1. Computerimplementiertes Verfahren, umfassend:
Empfangen, durch einen Registrierungsserver (103), einer Anfrage, eine Gerätekennung, Geräte-ID, welche einem Gerät (101) zugeordnet ist, nicht zu verfolgen;
Kennzeichnen, durch den Registrierungsserver, dass die Geräte-ID nicht zu verfolgen ist, in einer Aufzeichnung der Geräte-ID, welche in einer Registrierungsdatenbank (105, 205) gespeichert ist;
Empfangen, durch den Registrierungsserver, von einem zweiten Server (102, 106) einer Rückfrage, welche anfragt, ob eine oder mehrere Geräte-IDs gekennzeichnet sind, nicht verfolgt zu werden; und
Durchsuchen, durch den Registrierungsserver, der Registrierungsdatenbank nach jeder jeweiligen Aufzeichnung der einen oder der mehreren Geräte-IDs der Rückfrage;
Senden, durch den Registrierungsserver, einer Benachrichtigung an den zweiten Server, welche angibt, ob jede der einen oder der mehreren Geräte-IDs gekennzeichnet sind, nicht verfolgt zu werden.

2. Verfahren nach Anspruch 1, ferner umfassend:
Empfangen, durch den Registrierungsserver (103), einer zweiten Anfrage, welche ein Verfolgen für eine zweite Geräte-ID ermöglicht, welche einem zweiten Gerät zugeordnet ist; und
Kennzeichnen, durch den Registrierungsserver, der zweiten Geräte-ID, welche verfolgt werden kann, in einer zweiten Aufzeichnung der zweiten Geräte-ID, welche in der Registrierungsdatenbank (105) gespeichert ist.

3. Verfahren nach Anspruch 1, wobei die Anfrage, die Geräte-ID nicht zu verfolgen, von einem Clientgerät (101) empfangen wird, welches ein Softwaremodul ausführt, welches mit dem Registrierungsserver (103) kommuniziert, unter Verwendung einer API des Registrierungsservers.

4. Verfahren nach Anspruch 1, wobei der Registrierungsserver (103) einen Webserver umfasst, welcher eine Registrierungswebseite hostet, welche dazu eingerichtet ist, eine oder mehrere Anfragen von einem Clientgerät (101) zu empfangen.

5. Verfahren nach Anspruch 1, ferner umfassend Speichern, durch den Registrierungsserver, in der Registrierungsdatenbank (105, 205) einer neuen Aufzeichnung für die Geräte-ID der Anfrage als Reaktion auf ein Bestimmen, dass keine Aufzeichnung für die Geräte-ID in der Registrierungsdatenbank vorhanden ist.

6. Verfahren nach Anspruch 1, wobei der Registrierungsserver (103) die Benachrichtigung an den zweiten Server (102, 106) sendet, als Reaktion auf ein Bestimmen, dass der zweite Server bei einer API angemeldet ist, welche Daten mit dem Registrierungsserver kommuniziert.

7. Verfahren nach Anspruch 1, wobei die Benachrichtigung eine Auflistung jeder der einen oder der mehreren Geräte-IDs enthält, welche gekennzeichnet sind, nicht verfolgt zu werden.

8. Verfahren nach Anspruch 7, wobei die Benachrichtigung ferner Anweisungen für eine zweite Datenbank (107, 207) enthält, die Geräte-IDs zu löschen, welche gekennzeichnet sind, nicht verfolgt zu werden.

9. Verfahren nach Anspruch 8, wobei die Benachrichtigung ferner die Aufzeichnung jeder der einen oder der mehreren Geräte-IDs in der Rückfrage enthält.

10. Verfahren nach Anspruch 1, wobei die Geräte-ID aus der Gruppe ausgewählt ist, bestehend aus: einer MAC-Adresse, einer Drahtlos-Bezeichnung, einer SSID, einer Bake-ID, einer LTE-direkt-ID, einer Zigbee-ID, einer Gerätebezeichnung und einer Bluetooth-Adresse.

11. Verfahren nach Anspruch 1, wobei der zweite Server ein Aufzeichnungsgerät (102) ist, wobei Rückfrageanfragen eine Geräte-ID umfassen, und die Registrierungsdatenbank (105, 205) eine oder mehrere ausgenommene Geräte-IDs speichert, wobei das Verfahren ferner umfasst:
automatisches Verwerfen, durch den Registrierungsserver (103), der von dem Aufzeichnungsgerät empfangenen Geräte-ID als Reaktion auf ein Bestimmen, dass die Geräte-ID zu der wenigstens einen ausgenommenen ID passt;
als Reaktion auf ein Bestimmen, dass die Geräte-ID nicht zu der wenigstens einen ausgenommenen ID passt:
Empfangen, durch den Registrierungsserver, von Daten, welche einen Konsumenten beschreiben, welcher der Geräte-ID zugeordnet ist, von dem Aufzeichnungsgerät; und
Speichern, durch den Registrierungsserver, der Daten, welche den Konsumenten beschreiben, welcher der Geräte-ID zugeordnet ist, in einer zweiten Datenbank (107, 207).

12. Verfahren nach Anspruch 1, wobei die Anfrage, die Geräte-ID nicht zu verfolgen, und/oder die Anfrage, ob eine oder mehrere Geräte-IDs gekennzeichnet sind, nicht verfolgt zu werden, für eine Geolokalisierungsverfolgung ist.

13. System (100), umfassend:
eine Registrierungsdatenbank (105, 205), welche einen nichttransitorischen, maschinenlesbaren Speicher umfasst, welcher eine oder mehrere Aufzeichnungen von Geräte-IDs speichert, welche einem oder mehreren Geräten (101) zugeordnet sind, wobei eine Aufzeichnung dazu eingerichtet ist, zu kennzeichnen, ob die Geräte-ID der Aufzeichnung verfolgt werden kann;
einen Registrierungsserver (103), welcher einen Prozessor umfasst, welcher eine erste Aufzeichnung einer ersten Geräte-ID in der Registrierungsdatenbank aktualisiert, als Reaktion auf ein Empfangen einer Kennzeichnung, die erste ID nicht zu verfolgen, und als Reaktion auf ein Empfangen einer Rückfrage, welche bestimmt, ob eine oder mehrere rückgefragte Geräte-IDs gemäß der Aufzeichnung jeder rückgefragten Geräte-ID verfolgt werden können; und
einen zweiten Server (102, 106), welcher einen Prozessor umfasst, welcher die Rückfrage für die eine oder die mehreren rückgefragten Geräte-IDs an den Registrierungsserver sendet, und eine Benachrichtigung empfängt, welche jede der rückgefragten Geräte-IDs angibt, welche gekennzeichnet sind, nicht verfolgt zu werden.

14. System nach Anspruch 13, ferner umfassend:
ein Aufzeichnungsgerät (102), welches eine erste Geräte-ID eines erfassten Geräts unter Verwendung eines durch das erfasste Gerät gesendeten drahtlosen Signals identifiziert, die erfasste Geräte-ID zu dem zweiten Server sendet und dazu eingerichtet ist, das drahtlose Signal betreffende Daten auf ein Empfangen einer Autorisierung hin, das erfasste Gerät zu verfolgen, an die Verfolgungsentität weiterzugeben.

## Revendications

1. Procédé mis en oeuvre par ordinateur comprenant le fait :
de recevoir, par un serveur de registre (103), une demande de ne pas suivre un identifiant de dispositif, ID de dispositif, associé à un dispositif (101) ;
de désigner, par le serveur de registre, que l'ID de dispositif ne doit pas être suivi dans un enregistrement de l'ID de dispositif stocké dans une base de données de registre (105, 205) ;
de recevoir, par le serveur de registre, à partir d'un deuxième serveur (102, 106) une requête demandant si un ou plusieurs ID de dispositif est/sont désigné(s) comme ne devant pas être suivi(s) ; et
de rechercher, par le serveur de registre, la base de données de registre pour chaque enregistrement respectif du ou des plusieurs ID de dispositif de la requête ;
de transmettre, par le serveur de registre, une notification au deuxième serveur indiquant si chacun du ou des plusieurs ID de dispositif est désigné comme ne devant pas être suivi.

2. Procédé selon la revendication 1, comprenant en outre le fait :
de recevoir, par le serveur de registre (103), une deuxième demande permettant de suivre un deuxième ID de dispositif associé à un deuxième dispositif ; et
de désigner, par le serveur de registre, que le deuxième ID de dispositif peut être suivi dans un deuxième enregistrement du deuxième ID de dispositif stocké dans la base de données de registre (105).

3. Procédé selon la revendication 1, dans lequel la demande de ne pas suivre l'ID de dispositif est reçue à partir d'un dispositif client (101) exécutant un module logiciel communiquant avec le serveur de registre (103) en utilisant une API du serveur de registre.

4. Procédé selon la revendication 1, dans lequel le serveur de registre (103) comprend un serveur Web hébergeant une page Web d'inscription configurée pour recevoir une ou plusieurs demande(s) à partir d'un dispositif client (101).

5. Procédé selon la revendication 1, comprenant en outre le stockage, par le serveur de registre, dans la base de données de registre (105, 205) d'un nouvel enregistrement pour l'ID de dispositif de la demande en réponse à la détermination du fait qu'aucun enregistrement pour l'ID de dispositif n'existe dans la base de données de registre.

6. Procédé selon la revendication 1, dans lequel le serveur de registre (103) transmet la notification au deuxième serveur (102, 106) en réponse à la détermination du fait que le deuxième serveur est abonné à une API communiquant des données avec le serveur de registre.

7. Procédé selon la revendication 1, dans lequel la notification contient une liste de chacun du ou des plusieurs ID de dispositif désigné(s) comme ne devant pas être suivi(s).

8. Procédé selon la revendication 7, dans lequel la notification contient en outre des instructions pour une deuxième base de données (107, 207) pour purger les ID de dispositifs désignés comme ne devant pas être suivis.

9. Procédé selon la revendication 8, dans lequel la notification contient en outre l'enregistrement de chacun du ou des plusieurs ID de dispositif dans la requête.

10. Procédé selon la revendication 1, dans lequel l'ID de dispositif est choisi dans le groupe constitué par : une adresse MAC, un nom sans fil, un SSID, un ID de balise, un ID direct LTE, un ID Zigbee, un nom de dispositif et une adresse Bluetooth.

11. Procédé selon la revendication 1, dans lequel le deuxième serveur est un dispositif récepteur (102), où les demandes de requête comprennent un ID de dispositif, et la base de données de registre (105, 205) stocke un ou plusieurs ID de dispositif exempté(s), le procédé comprenant en outre le fait :
de rejeter automatiquement, par le serveur de registre (103), l'ID de dispositif reçu à partir du dispositif récepteur en réponse à la détermination du fait que l'ID de dispositif correspond à l'au moins un ID exempté ;
en réponse à la détermination du fait que l'ID de dispositif ne correspond pas à l'au moins un ID exempté :
de recevoir, par le serveur de registre, des données décrivant un consommateur associé à l'ID de dispositif à partir du dispositif récepteur ; et
de stocker, par le serveur de registre, les données décrivant le consommateur associé à l'ID de dispositif dans une deuxième base de données (107, 207).

12. Procédé selon la revendication 1, dans lequel la demande de ne pas suivre un ID de dispositif et/ou la demande consistant à savoir si un ou plusieurs ID de dispositif est/sont désigné(s) comme ne devant pas être suivi(s) est/sont destinée(s) à un suivi de géolocalisation.

13. Système (100) comprenant :
une base de données de registre (105, 205) comprenant une mémoire non transitoire lisible par machine stockant un ou plusieurs enregistrement(s) d'ID de dispositif associé(s) à un ou plusieurs dispositif(s) (101), où un enregistrement est configuré pour désigner si l'ID de dispositif de l'enregistrement peut être suivi ;
un serveur de registre (103) comprenant un processeur mettant à jour un premier enregistrement d'un premier ID de dispositif dans la base de données de registre en réponse à la réception d'une désignation de ne pas suivre le premier ID, et en réponse à la réception d'une requête déterminant si un ou plusieurs ID de dispositif demandé(s) peut/peuvent être suivi(s) en fonction de l'enregistrement de chaque ID de dispositif demandé ; et
un deuxième serveur (102, 106) comprenant un processeur transmettant la requête du ou des plusieurs ID de dispositif demandé(s) au serveur de registre, et recevant une notification indiquant chacun des ID de dispositif demandés désignés comme ne devant pas être suivis.

14. Système de la revendication 13, comprenant en outre :
un dispositif récepteur (102) identifiant un premier ID de dispositif d'un dispositif détecté en utilisant un signal sans fil transmis par le dispositif détecté, transmettant l'ID de dispositif détecté au deuxième serveur, et configuré pour transférer des données relatives au signal sans fil à l'entité de suivi après avoir reçu l'autorisation de suivre le dispositif détecté.
